# EUROPÄISCHE PATENTSCHRIFT

(11) **EP 3 118 707 B1**
(45) Veröffentlichungstag und Bekanntmachung des Hinweises auf die Patenterteilung: **28.03.2018**
(21) Anmeldenummer: 16177590.3
(22) Anmeldetag: 01.07.2016
(51) Int. Cl.: G05D 1/02

(54) **VERFAHREN ZUR FAHRSTEUERUNG EINES KOMMISSIONIERFLURFÖRDERZEUG**
METHOD FOR CONTROLLING THE LOCOMOTION OF A PICKING TRUCK
PROCEDE DE COMMANDE D'UN CHARIOT DE COMMISSIONNEMENT

(30) Priorität: 17.07.2015 DE 102015111611
(43) Veröffentlichungstag der Anmeldung: 18.01.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltsgesellschaft mbH

(56) Entgegenhaltungen:
- EP-A1- 0 032 393
- EP-A1- 0 221 423
- EP-A2- 0 391 206
- EP-A2- 2 036 763
- WO-A1-2015/097736
- DE-A1- 2 621 939
- DE-A1-102013 110 456
- JP-A- H0 624 510

## Beschreibung

Die Erfindung betrifft ein Verfahren zur Fahrsteuerung eines Kommissionierflurförderzeugs. Insbesondere betrifft die Erfindung ein Verfahren zur Steuerung eines Flurförderzeugs, insbesondere zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Regalkante bestimmt und das Flurförderzeug in konstantem Abstand zu einer Regalkante als Führungsseite an dieser entlang fährt, wobei ein Ende und/oder eine Unterbrechung der Regalkante oder der Regalkanten erfasst wird und die Steuerungsvorrichtung das Flurförderzeug am Ende der Regalkante oder dem Anfangspunkt der Unterbrechung stoppt.

Ein gattungsgemäßes Verfahren ist aus der DE 10 2013 110 456 A1 bekannt.

Beim Kommissionieren in Lagerhäusern werden spezielle Kommissionierflurförderzeuge eingesetzt, mit denen durch den Lagerbereich, beispielsweise durch Regalreihen gefahren wird, um die für eine Auslieferung bestimmten Waren zusammen zu stellen. Solche Kommissionierflurförderzeuge können dabei so ausgelegt sein, dass eine Person während des Kommissionierens mitfährt, aber auch beim Zusammenstellen der Waren und Fahren an einem Regallager entlang zu Fuß neben dem Fahrzeug mitläuft, um Waren aus dem Regallager zu entnehmen und diese auf eine Palette oder in einen Transportbehälter abzulegen.

Für die erleichterte Bedienung des Kommissionierflurförderzeugs sind dabei Fernbedienungen bekannt. Durch solche Fernbedienungen hat die kommissionierende Person, der Kommissionierer, die Möglichkeit, das Kommissionierflurförderzeug zu verlassen und dessen Fahrbewegungen mit der Fernbedienung anzusteuern. Eine bekannte Variante hierfür ist, dass der Kommissionierer durch einen Knopfdruck ein Vorwärtsfahren des Fahrzeugs anfordert, wobei das Kommissionierflurförderzeug so lange fährt, wie der Knopf gedrückt bleibt.

Nachteilig an diesem Stand der Technik ist, dass nicht gewährleistet ist, dass das Flurförderzeug beispielsweise in einem Regalgang seine Spur einhält und genau in der Richtung des Ganges fährt. Hierzu müsste die bedienende Person bzw. der Kommissionierer das Kommissionierflurförderzeug zeitaufwendig genau ausrichten und auch immer wieder kontrollieren, dass die vorgegebene Richtung eingehalten wird bzw. das Flurförderzeug nicht aus der Spur läuft.

Es ist daher bekannt, eine Steuerung vorzusehen die das Kommissionierflurförderzeug automatisch in einem Regalgang führt, indem es sich an der Umgebung orientiert. Hierfür werden beispielsweise Laserscanner eingesetzt, mit denen die Kontur der Seite des Ganges erkannt wird, während das Kommissionierflurförderzeugs fährt.

Aus der EP 2 533 119 A1 ist eine Vorrichtung zur Funkfernsteuerung eines Flurförderzeug mit einem Handschuh bekannt, der einen Funksender trägt, wobei das Flurförderzeug zur Kommissionierung eingesetzt werden kann.

Bei den nach dem Stand der Technik bekannten Lösungen wird das Flurförderzeug in einem festgelegten Abstand zu dem seitlichen Regal, wahlweise links oder rechts von dem Flurförderzeug, angeordnet und in Bewegung gesetzt. Es wird dabei vorausgesetzt, dass die Funktion nur in einer hierfür geeigneten Umgebung und unter Kontrolle des Bedieners gestartet wird. So wird während der Fahrt des Flurförderzeugs nicht überprüft, ob die Regalkontur, an der sich das Flurförderzeug orientiert, an einen Endpunkt kommt und insbesondere ob dieser Endpunkt Teil einer Unterbrechung ist, wie sie beispielsweise durch einen seitlichen Quergang auftreten kann. Wird in einem solchen Fall nicht durch den Bediener eingegriffen, kann es vorkommen, dass das Flurförderzeug ungewollt bzw. undefiniert in den Quergang einbiegt oder aus der Spur gerät und gegen Regalelemente fährt.

Wenn das Flurförderzeug beim Auftreten des Endes eines Regal ganz und/oder beim Erreichen eines Lehrgangs automatisch weiterfährt kann das Problem entstehen, dass querfahrende Flurförderzeuge oder Personen sehr rasch in den Sicherheitsbereich des Flurförderzeug gelangen und beispielsweise ein automatisiertes Anhalten durch eine Kollisionsüberwachung nur mit Aufwand gewährleistet werden kann.

Der vorliegenden Erfindung liegt die Aufgabe zugrunde, ein Verfahren zur Steuerung eines Flurförderzeugs, insbesondere eines Flurförderzeugs zur Kommissionierung, zur Verfügung zu stellen, das die zuvor genannten Nachteile vermeidet und mit dem die Bedienung des Flurförderzeug während des Kommissionierens vereinfacht sowie eine effizientere Arbeit ermöglicht wird.

Diese Aufgabe wird durch ein Verfahren mit den Merkmalen des unabhängigen Patentanspruchs 1 gelöst. Vorteilhafte Weiterbildungen der Erfindung sind in den Unteransprüchen angegeben.

Die Aufgabe wird dadurch gelöst, dass bei einem Verfahren zur Steuerung eines Flurförderzeugs, insbesondere zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Regalkante bestimmt und das Flurförderzeug in konstantem Abstand zu einer Regalkante als Führungsseite an dieser entlang fährt, ein Ende und/oder eine Unterbrechung der Regalkante oder der Regalkanten erfasst wird und die Steuerungsvorrichtung das Flurförderzeug am Ende der Regalkante oder dem Anfangspunkt der Unterbrechung stoppt, wobei die Steuerungsvorrichtung eine Fortsetzung der Regalkante in der projizierten Verlängerung sucht und eine Verbindungslinie zu der Fortsetzung der Regalkante über die Unterbrechung hinweg bestimmt und nach einem Eingabebefehl einer bedienenden Person das Flurförderzeug in konstantem Abstand zu der Verbindungslinie das Flurförderzeug über die Unterbrechung weiterfährt.

Vorteilhaft wird durch das automatische Stoppen am Ende eines Regalgangs bzw. bei Erreichen eines Quergangs verhindert, dass das Flurförderzeug unkoordiniert in eine andere Richtung fährt. Insbesondere kann ein unbeabsichtigtes Befahren und teilweises oder vollständiges Abbiegen in einen Quergang verhindert werden. Auch wird die Sicherheit zusätzlich erhöht, da der Quergang nur unter Kontrolle der bedienenden Person überquert wird. Auch wird die kommissionierende Person entlastet, da diese nicht auf Quergänge und mit diesen verbundene Gefahren achten muss. Die Auswertung der Daten des Sensors und insbesondere die Erfassung der Umgebung durch die Steuerungsvorrichtung erfolgt dabei mithilfe der im Stand der Technik bekannten Methoden und Algorithmen der digitalen Bildverarbeitung. So können beispielsweise mithilfe einer Konturenerkennung typische Elemente einer Regalgasse, wie senkrechte Regalpfosten, Paletten sowie eingelagerte Waren erkannt werden und aus diesen Elementen eine vordere Regalkante bestimmt werden. Unter dem Begriff Regalkante soll in diesem Zusammenhang ganz allgemein auch eine in einer rein ebenerdigen ausgerichteten Anordnung von Waren in einem Blocklager ohne Regale verstanden werden.

Die Steuerungsvorrichtung sucht eine Fortsetzung der Regalkante in der projizierten Verlängerung und bestimmt eine Verbindungslinie zu der Fortsetzung der Regalkante über die Unterbrechung hinweg.

Durch diese Verbindungslinie wird über eine Unterbrechung die Regalkante fortgesetzt.

Nach einem Eingabebefehl einer bedienenden Person fährt das Flurförderzeug in konstantem Abstand zu der Verbindungslinie das Flurförderzeug über die Unterbrechung weiter.

Dadurch kann das Flurförderzeug automatisch und in definierten Abstand zu der Verbindungslinie, somit insgesamt in einer geraden Linie über die Unterbrechung bzw. den Quergang hinweg kreuzen. Dies kann für den Bediener auf bequeme Art und Weise geschehen, jedoch unter dessen Kontrolle, indem ein Eingabefehl durch eine Eingabevorrichtung gegeben wird. Dabei können alle im Stand der Technik bekannten Eingabevorrichtungen zur Anwendung kommen, beispielsweise Tasten auf einem Bedienfeld bis hin zu Fernsteuerungen.

Vorteilhaft stoppt die Steuerungsvorrichtung das Flurförderzeug nur bei einem Ende der Regalkante oder eine Unterbrechung der Regalkante, die die Führungsseite bildet.

In einer Regalgasse, die durch zwei Regale gebildet wird, wird von den beiden durch die Steuerungsvorrichtung erkennbaren Regalkanten auf beiden Seiten im Regelfall eine ausgewählt, an der entlang als Führungsseite das Flurförderzeug beim Kommissionieren automatisch geführt wird, indem ein festgelegter Abstand zu dieser Regalkante auf der Führungsseite eingehalten wird. Im Regelfall befindet sich das Flurförderzeug auch näher an dieser Führungsseite. Daher kann eine Beschränkung erfolgen, dass nur das Ende der Regalkante auf dieser Seite bzw. eine Quergasse auf der Führungsseite zu einem Stopp des Flurförderzeugs führt.

Die Steuerungsvorrichtung kann aus den Daten des Sensors die Länge der Unterbrechung bestimmen.

In einer vorteilhaften Ausgestaltung des Verfahrens stoppt bei einer Unterbrechung mit einer Länge kürzer als ein Schwellenwert die Steuerungsvorrichtung das Flurförderzeug an der Unterbrechung nicht.

Dadurch können von dem automatischen Stopp Quergänge unter einer bestimmten Breite ausgenommen werden. Dies kann vorteilhaft sein, um beispielsweise einen unnötigen Halt an schmalen Quergängen zu verhindern, die nicht durch Gabelstapler befahren werden können und etwa nur für den Seitenwechsel von Personen vorgesehen sind.

Der Sensor kann ein optischer Sensor sein, insbesondere ein Laserscanner, eine 3D-Kamera oder eine Stereokamera.

Der Sensor kann ein Radarsensor sein.

Es ist auch denkbar, ergänzend ein Verfahren vorzusehen, bei dem ein gewolltes Einbiegen in einen Quergang erfolgt. Hierfür können beispielsweise über Parameter Vorgaben an die Steuerungsvorrichtung des Flurförderzeugs eingegeben werden. So ist es denkbar, die Seite links bzw. rechts und/oder eine Anzahl von zuvor zu passierenden Quergängen und/oder eine Mindestbreite eines Quergangs vorzugeben, so dass abhängig von diesen Parametern die Steuerungsvorrichtung anstatt einem Stopp das Flurförderzeug abbiegend in den dadurch ausgewählten Quergang fährt.

Weitere Vorteile und Einzelheiten der Erfindung werden anhand des in den schematischen Figuren dargestellten Ausführungsbeispiels näher erläutert. Hierbei zeigt
- Fig. 1: schematisch ein Kommissionierflurförderzeug in einem Regalgang mit Quergängen und
- Fig. 2: das Kommissionierflurförderzeug der Fig. 1 in dem Regalgang mit Orientierung an der rechten Seite.

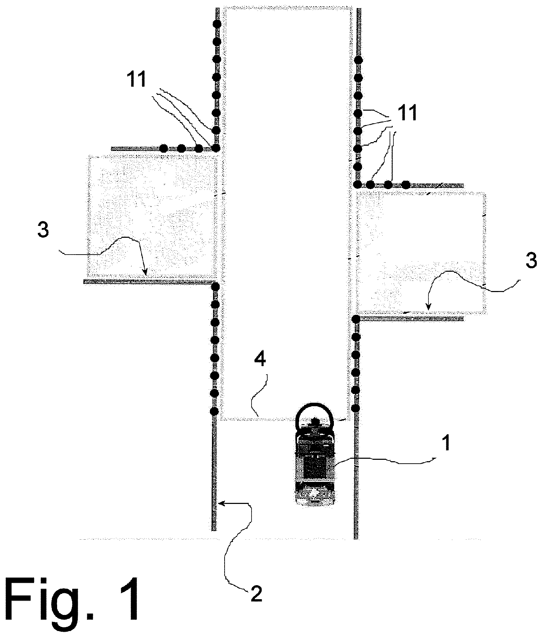

Die Fig. 1 zeigt schematisch ein Flurförderzeug 1 zum Kommissionieren in einem Regalgang 2 mit Quergängen 3. Wie durch die Punkte 11 angedeutet, erfasst ein optischer Sensor, beispielsweise ein Laserscanner oder eine TOF-Kamera, einen Überwachungsbereich durch Bildpunkte und bestimmt daraus die Größe eines möglichen Fahrbereichs 4 in dem Regalgang 2. Hierfür werden die bekannten Verfahren der Bildverarbeitung und Bilderkennung eingesetzt.

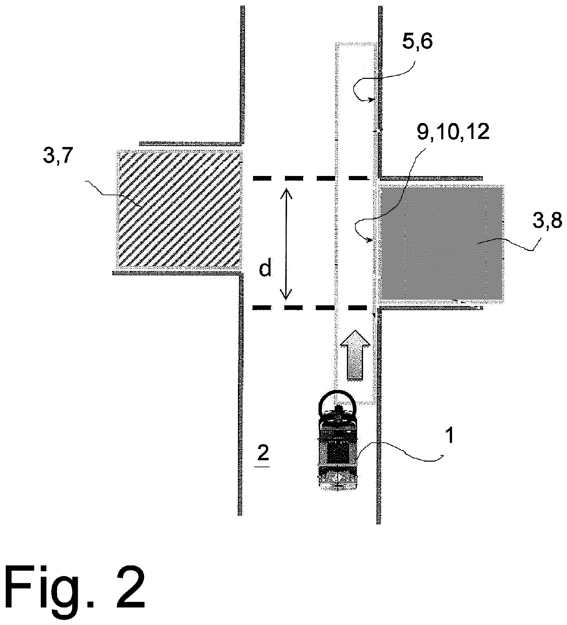

Die Fig. 2 zeigt das Flurförderzeug 1 der Fig. 1 in dem Regalgang 2 mit Orientierung an einer rechten Regalkante 5 als Führungsseite 6, an der entlang das Flurförderzeug 1 von der Steuerung in einem festen Abstand automatisch entlang gefahren wird, wie durch die Rechteckdarstellung mit dem Pfeil angedeutet. Die Quergänge 3 teilen sich dadurch auf in einen nichtrelevanten Quergang 7, auf der der Führungsseite 6 gegenüberliegende Seite, an dem kein Stopp durch die Steuerungsvorrichtung erfolgt und der nicht beachtet wird, sowie einen relevanten Quergang 8 mit einer Breite d auf der Führungsseite. Da die Breite d größer ist als ein Schwellenwert hält das Flurförderzeug 1 automatisch am Beginn des relevanten Quergangs 8 als Unterbrechung 12 der Regalkante 5 an und überquert diesen relevanten Quergang 8 geführt entlang einer virtuellen Linie 9 als Verbindungslinie 10, sobald die Bedienperson einen entsprechenden Eingabebefehl hierzu gibt.

## Patentansprüche

1. Verfahren zur Steuerung eines Flurförderzeugs (1), insbesondere zur Kommissionierung, wobei das Flurförderzeug (1) zur Überwachung der Umgebung einen Sensor aufweist, der mit einer Steuerungsvorrichtung verbunden ist, und die Steuerungsvorrichtung nach einem Startbefehl das Flurförderzeug (1) automatisch ohne Signal eines durch eine Person betätigten Fahrsignalgebers fährt, durch Auswertung der Daten des Sensors einen Überwachungsbereich erfasst, in den Daten mindestens eine Regalkante (5) bestimmt und das Flurförderzeug in konstantem Abstand zu einer Regalkante (5) als Führungsseite (6) an dieser entlang fährt, wobei ein Ende und/oder eine Unterbrechung (12) der Regalkante (5) oder der Regalkanten (5) erfasst wird und die Steuerungsvorrichtung das Flurförderzeug am Ende der Regalkante (5) oder dem Anfangspunkt der Unterbrechung (12) stoppt,
**dadurch gekennzeichnet,**
**dass** die Steuerungsvorrichtung eine Fortsetzung der Regalkante (5) in der projizierten Verlängerung sucht und eine Verbindungslinie (10) zu der Fortsetzung der Regalkante (5) über die Unterbrechung (12) hinweg bestimmt und nach einem Eingabebefehl einer bedienenden Person das Flurförderzeug (1) in konstantem Abstand zu der Verbindungslinie (10) das Flurförderzeug (1) über die Unterbrechung (12) weiterfährt.

2. Verfahren nach Anspruch 1,
**dadurch gekennzeichnet,**
**dass** die Steuerungsvorrichtung das Flurförderzeug (1) nur bei einem Ende der Regalkante (5) oder eine Unterbrechung der Regalkante (5) stoppt, die die Führungsseite (6) bildet.

3. Verfahren nach Anspruch 1 oder 2,
**dadurch gekennzeichnet,**
**dass** die Steuerungsvorrichtung aus den Daten des Sensors die Länge (d) der Unterbrechung (12) bestimmt.

4. Verfahren nach Anspruch 3,
**dadurch gekennzeichnet,**
**dass** bei einer Unterbrechung (12) mit einer Länge (d) kürzer als ein Schwellenwert die Steuerungsvorrichtung das Flurförderzeug (1) an der Unterbrechung (12) nicht stoppt.

5. Verfahren nach einem der Ansprüche 1 bis 4,
**dadurch gekennzeichnet,**
**dass** der Sensor ein optischer Sensor ist, insbesondere ein Laserscanner, eine 3D- Kamera oder eine Stereokamera.

6. Verfahren nach einem der Ansprüche 1 bis 5,
**dadurch gekennzeichnet,**
**dass** der Sensor ein Radarsensor ist.

## Claims

1. Method for controlling an industrial truck (1), in particular a picking vehicle, wherein the industrial truck (1) has for monitoring the surroundings a sensor which is connected to a control device, and after a starting command the control device automatically moves the industrial truck (1) without a signal from a driving signal transmitter which is activated by a person, senses a monitoring range by evaluating the data of the sensor, determines at least one shelf rack edge (5) in the data, and moves the industrial truck at a constant distance from a shelf rack edge (5), along the latter as a guide side (6), wherein an end and/or an interruption (12) in the shelf rack edge (5) or the shelf rack edges (5) is sensed, and the control device stops the industrial truck at the end of the shelf rack edge (5) or the starting point of the interruption (12),
**characterized**
**in that** the control device searches for a continuation of the shelf rack edge (5) in the projected prolongation, and determines a connecting line (10) to the continuation of the shelf rack edge (5) beyond the interruption (12), and after an input command of an operating person the industrial truck (1) moves further via the interruption (12) at a constant distance from the connecting line (10).

2. Method according to Claim 1,
**characterized**
**in that** the control device stops the industrial truck (1) only at an end of the shelf rack edge (5) or an interruption of the shelf rack edge (5) which forms the guide side (6).

3. Method according to Claim 1 or 2,
**characterized**
**in that** the control device determines the length (d) of the interruption (12) from the data of the sensor.

4. Method according to Claim 3,
**characterized**
**in that** in the case of an interruption (12) with a length (d) which is shorter than a threshold value the control device does not stop the industrial truck (1) at the interruption (12).

5. Method according to one of Claims 1 to 4,
**characterized**
**in that** the sensor is an optical sensor, in particular a laser scanner, a 3D camera or a stereo camera.

6. Method according to one of Claims 1 to 5,
**characterized**
**in that** the sensor is a radar sensor.

## Revendications

1. Procédé de commande d'un chariot de manutention (1), en particulier destiné à la préparation de commandes, dans lequel le chariot de manutention (1) comporte un capteur relié à un dispositif de commande pour la surveillance de l'environnement et le dispositif de commande pilote automatiquement le chariot de manutention (1) sans signal provenant d'un générateur de signaux de commande actionné par une personne après un ordre de démarrage, détecte une zone de surveillance en évaluant les données du capteur, détermine au moins un bord de rayonnage (5) dans les données, et pilote le chariot de manutention à une distance constante d'un bord de rayonnage (5) en tant que face de guidage (6) le long de celui-ci, dans lequel une extrémité et/ou une interruption (12) du bord de rayonnage (5) ou des bords de rayonnages (5) est détectée et le dispositif de commande arrête le chariot de manutention à l'extrémité du bord de rayonnage (5) ou au point de départ de l'interruption (12),
**caractérisé en ce que** le dispositif de commande cherche une continuation du bord de rayonnage (5) dans le prolongement projeté et détermine une ligne de raccordement (10) allant jusqu'à la continuation du bord de rayonnage (5) au-delà de l'interruption (12) et **en ce qu'**après une instruction d'entrée provenant d'un opérateur, le chariot de manutention (1) continue de déplacer à une distance constante de la ligne de raccordement (10) au-delà de l'interruption (12).

2. Procédé selon la revendication 1,
**caractérisé en ce que** le dispositif de commande arrête le chariot de manutention (1) uniquement à une extrémité du bord de rayonnage (5) ou à une interruption du bord de rayonnage (5) qui forme la face de guidage (6).

3. Procédé selon la revendication 1 ou 2,
**caractérisé en ce que** le dispositif de commande détermine la longueur (d) de l'interruption (12) à partir des données du capteur.

4. Procédé selon la revendication 3,
**caractérisé en ce que**, dans le cas d'une interruption (12) ayant une longueur (d) inférieure à une valeur de seuil, le dispositif de commande n'arrête pas le chariot de manutention (1) au niveau de l'interruption (12).

5. Procédé selon l'une quelconque des revendications 1 à 4,
**caractérisé en ce que** le capteur est un capteur optique, en particulier un scanner laser, une caméra 3D ou une caméra stéréoscopique.

6. Procédé pour l'une quelconque des revendications 1 à 5,
**caractérisé en ce que** le capteur est un capteur radar.
